# EUROPEAN PATENT APPLICATION

(11) **EP 2 840 761 A1**
(43) Date of publication of application: **25.02.2015**
(21) Application number: 13819381.8
(22) Date of filing: 09.07.2013
(51) Int. Cl.: H04L 29/08

(54) **METHOD, DEVICE AND SYSTEM FOR REALIZING AUGMENTED REALITY INFORMATION SHARING**

(30) Priority: 17.07.2012 CN 201210246717
(71) Applicant: ZTE Corporation, Shenzhen, Guangdong 518057 (CN)
(72) Inventor: WANG, Hong, Shenzhen Guangdong 518057 (CN); GUO, Chunyan, Shenzhen Guangdong 518057 (CN)
(74) Representative: Tischner, Oliver
(86) International application number: PCT/CN2013/079075
(87) International publication number: WO 2014/012444

(57) **Abstract**

A method, device and system for realizing augmented reality information sharing are disclosed. The method includes that an intelligent mobile terminal transmits an obtained current image and determined current position information to a cloud end server; the cloud end server sends the received image to a computer related to the intelligent mobile terminal, obtains attribute information of the image according to the received position information, and sends the attribute information to the intelligent mobile terminal and the computer; and the intelligent mobile terminal and the computer respectively overlap the image and the attribute information to form augmented reality information. The disclosure can realize sharing of augmented reality information.

## Description

### TECHNICAL FIELD

The disclosure relates to the field of wireless communication technology, and in particular to a method, a device and a system for realizing Augmented Reality (AR) information sharing.

### BACKGROUND

Currently, mobile terminals, in particular intelligent mobile terminals such as smart phones, tablet PCs, etc., not only have computing, video recording, image display, phone calling and intercom functions but also offer augmented reality, positioning and Internet access capabilities.

Such augmented reality, also called extended reality, augmented vision or augmented reality vision, utilizing augmented reality technology, can realize real-time, dynamic overlapping of attribute information of the real scene obtained by the intelligent mobile terminal in the real scene captured by the intelligent mobile terminal, and the screen of the intelligent mobile terminal can display not only the real scene but also attribute information such as text, link and graphic information, for example: a user using an intelligent mobile terminal with augmented reality function enabled to capture a piece of cultural relic exhibited at a museum, the intelligent mobile terminal obtaining attribute information of the cultural relic and displaying both the cultural relic and its attribute information on the screen, such attribute information can be text, picture captions, and links to related news, etc., and forming augmented reality information.

However, current intelligent mobile terminals with the augmented reality function can not share, on a real-time basis, the obtained augmented reality information with other users, such as intelligent mobile terminal users or PC users.

### SUMMARY

A main purpose of the embodiments of the disclosure is to provide a method, a device and a system for realizing augmented reality information sharing so as to realize sharing of augmented reality information.

In order to achieve the above objective, the technical solution of the embodiment of the disclosure is implemented as follows.

A method for realizing augmented reality information sharing is provided in an embodiment of the disclosure, which includes that:
an intelligent mobile terminal transmits an obtained current image and determined current position information to a cloud end server;
the cloud end server sends the received image to a computer related to the intelligent mobile terminal, obtains attribute information of the image according to the received position information, and sends the attribute information to the intelligent mobile terminal and the computer; and
the intelligent mobile terminal and the computer respectively overlap the image and the attribute information to form augmented reality information.

Preferably, after the intelligent mobile terminal transmits the obtained current image and determined current position information to the cloud end server, the method also includes that:
the cloud end server sends the received position information to a computer related to the intelligent mobile terminal; and
the computer obtains auxiliary attribute information of the image according to the received position information, and sends the auxiliary attribute information to the intelligent mobile terminal via the cloud end server;

Accordingly, the intelligent mobile terminal and the computer respectively overlapping the image and the attribute information may include that:
the intelligent mobile terminal and the computer respectively overlap the image, the attribute information and the auxiliary attribute information.

Preferably, before the intelligent mobile terminal transmits the obtained current image and determined current position information to the cloud end server, the method also includes:
the intelligent mobile terminal determines the current position by using one or more of a voice positioning method, a satellite positioning method, and a Base Station positioning method.

Preferably, after the intelligent mobile terminal transmits the obtained current image and determined current position information to the cloud end server, the method also includes:
the cloud end server stores the received image and position information as well as the obtained attribute information.

Preferably, sending the attribute information to the intelligent mobile terminal and the computer is using the asynchronous transmission method to send the attribute information to the intelligent mobile terminal and the computer.

A system for realizing augmented reality information sharing is provided in an embodiment of the disclosure, and the system includes an intelligent mobile terminal, a cloud end server and at least one computer; wherein,
the intelligent mobile terminal is configured to transmit an obtained current image and determined current position information to the cloud end server, and overlap the obtained image and the attribute information from the cloud end server to form augmented reality information;
the cloud end server is configured to send the image transmitted from the intelligent mobile terminal to the computer related to the intelligent mobile terminal, obtain attribute information of the image according to the position information transmitted from the intelligent mobile terminal, and send the attribute information to the intelligent mobile terminal and the computer; and
the computer is configured to overlap the image and the attribute information transmitted from the cloud end server to form augmented reality information.

Preferably, the cloud end server is also configured to send the position information transmitted from the intelligent mobile terminal to the computer related to the intelligent mobile terminal;
the computer is also configured to obtain auxiliary attribute information of the image according to the position information transmitted from the cloud end server, send the auxiliary attribute information to the intelligent mobile terminal via the cloud end server; and overlap the obtained auxiliary attribute information as well as the image and attribute information transmitted from the cloud end server; and
the intelligent mobile terminal is also configured to overlap the obtained image as well as the attribute information and auxiliary attribute information transmitted from the cloud end server.

An intelligent mobile terminal is provided in an embodiment of the disclosure, and the intelligent mobile terminal includes an image position information sending unit and an overlapping unit; wherein,
the image position information sending unit is configured to send the obtained current image and determined current position information to the cloud end server; and
the overlapping unit is configured to overlap the obtained image and the attribute information transmitted from the cloud end server to form augmented reality information.

A cloud end server is provided in an embodiment of the disclosure, and the cloud end server includes an image sending unit and an attribute information obtaining/sending unit; wherein,
the image sending unit is configured to send the image transmitted from the intelligent mobile terminal to the computer related to the intelligent mobile terminal; and
the attribute information obtaining/sending unit is configured to obtain attribute information of the image according to the position information transmitted from the intelligent mobile terminal and send the attribute information to the intelligent mobile terminal and the computer.

A computer is provided in the embodiment of the disclosure, and the computer includes a receiving unit and an overlapping unit; wherein,
the receiving unit is configured to receive the image and attribute information transmitted from the cloud end server; and
the overlapping unit is configured to overlap the image and attribute information received by the receiving unit to form augmented reality information.

It is known from the above that with the technical solution of the embodiment of the disclosure, the intelligent mobile terminal transmits an obtained current image and determined current position information to a cloud end server; the cloud end server sends the received image to a computer related to the intelligent mobile terminal, obtains attribute information of the image according to the received position information, and sends the attribute information to the intelligent mobile terminal and the computer; the intelligent mobile terminal and the computer respectively overlap the image and the attribute information to form augmented reality information; thus sharing of augmented reality information is realized between the intelligent mobile terminal and the computer related thereof.

### BRIEF DESCRIPTION OF THE DRAWINGS

Figure 1 is a flowchart of the first embodiment of a method for realizing augmented reality information sharing provided in the disclosure;
Figure 2 is a structural diagram of an embodiment of a system for realizing augmented reality information sharing provided in the disclosure; and
Figure 3 is a flowchart of the second embodiment of a method for realizing augmented reality information sharing provided in the disclosure.

### DETAILED DESCRIPTION

The basic idea of the embodiment of the disclosure is: an intelligent mobile terminal transmits an obtained current image and determined current position information to a cloud end server; the cloud end server sends the received image to a computer related to the intelligent mobile terminal, obtains attribute information of the image according to the received position information, and sends the attribute information to the intelligent mobile terminal and the computer; and the intelligent mobile terminal and the computer respectively overlap the image and the attribute information to form augmented reality information.

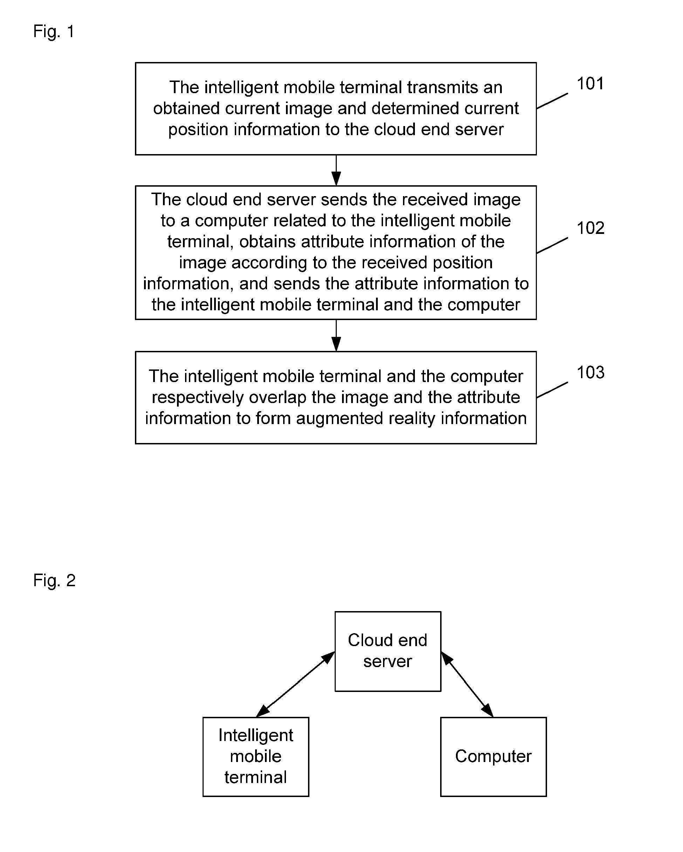

The first embodiment of the method for realizing augmented reality information sharing provided in the disclosure is described as follows. As shown in Figure 1, the first embodiment of the disclosure includes the following steps.

Step 101, the intelligent mobile terminal transmits an obtained current image and determined current position information to a cloud end server;
here, the intelligent mobile terminal may use a built-in camera or a common camera to capture the image.

The intelligent mobile terminal may determine the current position using one or more of the voice positioning method, satellite positioning method, and BS positioning method. A combination of multiple positioning methods can obtain a more accurate current position to allow the cloud end server to obtain more accurate attribute information of the image.

Step 102, the cloud end server sends the received image to a computer related to the intelligent mobile terminal, obtains attribute information of the image according to the received position information, and sends the attribute information to the intelligent mobile terminal and the computer;
here, the intelligent mobile terminal logs onto the cloud end server and sends an association request to one or more computers via the cloud end server, i.e. inviting a friend to join video sharing, the computer that accepts the association request of the intelligent mobile terminal feeds back a message to the cloud end server, and the cloud end server associates the intelligent mobile terminal and the computer which sent the feedback message according to the received feedback message.

Specifically, obtaining attribute information of the image according to the received position information is that: the cloud end server inquires about attribute information of the image according to the received position information via cloud computing and cloud storage, thereby obtaining attribute information of the image.

The computer may be any device equipped with computer functionality, including an intelligent mobile terminal or tablet PC, etc.

Here, the cloud end server may also store the received image and position information as well as the obtained attribute information, thus not only making it easier for a user to call relevant information but also preventing the intelligent mobile terminal and the computer from storing oversized data and therefore avoiding waste of storage resources.

Alternatively, the cloud end server may also send the received position information to a computer related to the intelligent mobile terminal.

Preferably, the cloud end server may adopt the asynchronous transmission method to send the attribute information to the intelligent mobile terminal and the computer; thus, the intelligent mobile terminal and the computer may, while receiving the attribute information, utilize the received attribute information so as to speed up data response.

Step 103, the intelligent mobile terminal and the computer respectively overlap the image and the attribute information to respectively form augmented reality information.

Alternatively, the computer obtains auxiliary attribute information of the image according to the received position information, such auxiliary attribute information may be text, picture captions, and links to related news, etc., and sends the auxiliary attribute information to the intelligent mobile terminal via the cloud end server; accordingly, the intelligent mobile terminal and the computer respectively overlapping the image and the attribute information is that the intelligent mobile terminal and the computer respectively overlap the image, the attribute information and the auxiliary attribute information.

The auxiliary attribute information of the image that the computer obtains according to the received position information may serve as complement to the attribute information that the cloud end server obtains, thereby delivering a better result of augmented reality obtained after overlapping.

A system for realizing augmented reality information sharing is provided in an embodiment of the disclosure, as shown in Figure 2, the system includes an intelligent mobile terminal, a cloud end server and at least one computer.

The intelligent mobile terminal is configured to transmit the obtained current image and determined current position information to the cloud end server; and overlap the obtained image and the attribute information from the cloud end server to form augmented reality information;

The cloud end server is configured to send the image transmitted from the intelligent mobile terminal to the computer related to the intelligent mobile terminal, obtain attribute information of the image according to the position information transmitted from the intelligent mobile terminal, and send the attribute information to the intelligent mobile terminal and the computer;
The computer is configured to overlap the image and the attribute information transmitted from the cloud end server to form augmented reality information.

Alternatively, the cloud end server is also configured to send the position information transmitted from the intelligent mobile terminal to the computer related to the intelligent mobile terminal;

The computer is also configured to obtain auxiliary attribute information of the image according to the position information transmitted from the cloud end server, and send the auxiliary attribute information to the intelligent mobile terminal via the cloud end server;

Accordingly, the intelligent mobile terminal is also configured to overlap the obtained image as well as the attribute information and auxiliary attribute information transmitted from the cloud end server;

The computer is also configured to overlap the obtained auxiliary attribute information as well as the image and attribute information transmitted from the cloud end server.

The cloud end server is also configured to store the received image and position information as well as the obtained attribute information.

An intelligent mobile terminal is also provided in an embodiment of the disclosure, and the intelligent mobile terminal includes an image position information sending unit and an overlapping unit.

The image position information sending unit is configured to send the obtained current image and determined current position information to the cloud end server; and
the overlapping unit is configured to overlap the obtained image and the attribute information transmitted from the cloud end server to form augmented reality information.

A cloud end server is also provided in the embodiment of the disclosure, and the cloud end server includes an image sending unit and an attribute information obtaining/ sending unit.

The image sending unit is configured to send the image transmitted from the intelligent mobile terminal to the computer related to the intelligent mobile terminal.

The attribute information obtaining/sending unit is configured to obtain attribute information of the image according to the position information transmitted from the intelligent mobile terminal and send the attribute information to the intelligent mobile terminal and the computer.

The cloud end server also includes a storage unit, which is configured to store the received image and position information as well as the obtained attribute information.

A computer is also provided in an embodiment of the disclosure, including: a receiving unit and an overlapping unit.

The receiving unit is configured to receive the image and attribute information transmitted from the cloud end server.

The overlapping unit is configured to overlap the image and attribute information received by the receiving unit to form augmented reality information.

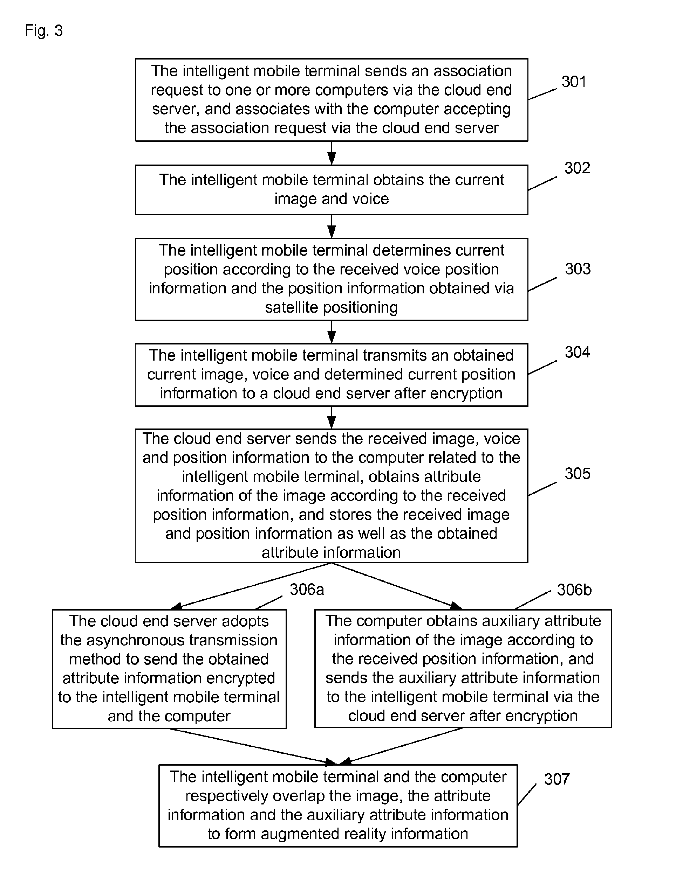

The second embodiment of the method for realizing augmented reality information sharing provided in the disclosure is described as follows. As shown in Figure 3, the second embodiment of the disclosure includes the following steps.

Step 301, the intelligent mobile terminal sends an association request to one or more computers via the cloud end server, and associates with the computer accepting the association request via the cloud end server.

Specifically, the intelligent mobile terminal logs onto the cloud end server via a cloud account and sends an association request to one or more computers in a cloud address list via the cloud end server, i.e. inviting a friend to join video sharing, the computer that accepts the association request of the intelligent mobile terminal feeds back a message to the cloud end server, and the cloud end server associates the intelligent mobile terminal and the computer sending the feedback message according to the received feedback message.

Step 302, the intelligent mobile terminal obtains the current image and voice.

Step 303, the intelligent mobile terminal determines current position according to the received voice position information and the position information obtained via satellite positioning.

Step 304, the intelligent mobile terminal transmits an obtained current image, voice and determined current position information to a cloud end server after encryption.

Step 305, the cloud end server sends the received image, voice and position information to the computer related to the intelligent mobile terminal, obtains attribute information of the image according to the received position information, and stores the received image and position information as well as the obtained attribute information.

Specifically, the cloud end server inquires about attribute information of the image according to the received position information via cloud computing and cloud storage, thereby obtaining attribute information of the image.

Step 306a, the cloud end server adopts the asynchronous transmission method to send the obtained attribute information encrypted to the intelligent mobile terminal and the computer.

Step 306b, the computer obtains auxiliary attribute information of the image according to the received position information; such auxiliary attribute information may be text, picture captions, and links to related news, etc., and the computer sends the auxiliary attribute information to the intelligent mobile terminal via the cloud end server after encryption.

Step 307, the intelligent mobile terminal and the computer respectively overlap the image, the attribute information and the auxiliary attribute information to form augmented reality information.

Specifically, the intelligent mobile terminal overlaps its own obtained image and the attribute information and auxiliary attribute information transmitted from the cloud end server to form augmented reality information.

The computer overlaps the image and attribute information transmitted from the cloud end server and its own obtained auxiliary attribute information to form augmented reality information.

Thus, sharing of augmented reality information between the intelligent mobile terminal and the computer related to it is realized.

The above mentioned are the preferred embodiments of the disclosure only and are in no way intended to restrict the scope of protection of the disclosure.

## Claims

1. A method for realizing augmented reality information sharing, comprising:
transmitting, by an intelligent mobile terminal, an obtained current image and determined current position information to a cloud end server;
sending, by the cloud end server, the obtained current image to a computer related to the intelligent mobile terminal, obtaining attribute information of the obtained current image according to the determined current position information, and sending the attribute information to the intelligent mobile terminal and the computer; and
respectively overlapping, by the intelligent mobile terminal and the computer, the obtained current image and the attribute information to form augmented reality information.

2. The method according to Claim 1, further comprising: after the intelligent mobile terminal transmits the obtained current image and the determined current position information to the cloud end server,
sending, by the cloud end server, the determined current position information to a computer related to the intelligent mobile terminal;
obtaining, by the computer, auxiliary attribute information of the obtained current image according to the determined current position information, and sending the auxiliary attribute information to the intelligent mobile terminal via the cloud end server;
accordingly, the intelligent mobile terminal and the computer respectively overlapping the obtained current image and the attribute information includes that the intelligent mobile terminal and the computer respectively overlap the obtained current image, the attribute information and the auxiliary attribute information.

3. The method according to Claim 1, further comprising: before the intelligent mobile terminal transmits the obtained current image and the determined current position information to the cloud end server,
determining, by the intelligent mobile terminal, the current position by using one or more of a voice positioning method, a satellite positioning method, and a Base Station positioning method.

4. The method according to Claim 1, further comprising: after the intelligent mobile terminal transmits the obtained current image and the determined current position information to the cloud end server,
storing, by the cloud end server, the obtained current image and the determined current position information as well as the obtained attribute information.

5. The method according to Claim 1, wherein sending the attribute information to the intelligent mobile terminal and the computer is using a asynchronous transmission method to send the attribute information to the intelligent mobile terminal and the computer.

6. A system for realizing augmented reality information sharing, comprising an intelligent mobile terminal, a cloud end server and at least one computer; wherein,
the intelligent mobile terminal is configured to transmit an obtained current image and determined current position information to the cloud end server, and overlap the obtained current image and attribute information sent from the cloud end server to form augmented reality information;
the cloud end server is configured to send the obtained current image transmitted from the intelligent mobile terminal to the computer related to the intelligent mobile terminal, obtain the attribute information of the obtained current image according to the determined current position information transmitted from the intelligent mobile terminal, and send the attribute information to the intelligent mobile terminal and the computer; and
the computer is configured to overlap the obtained current image and the attribute information transmitted from the cloud end server to form augmented reality information.

7. The system according to Claim 6, wherein,
the cloud end server is also configured to send the determined current position information transmitted from the intelligent mobile terminal to the computer related to the intelligent mobile terminal;
the computer is also configured to obtain auxiliary attribute information of the obtained current image according to the determined current position information transmitted from the cloud end server, send the auxiliary attribute information to the intelligent mobile terminal via the cloud end server, and overlap the obtained auxiliary attribute information as well as the obtained current image and the attribute information transmitted from the cloud end server; and
the intelligent mobile terminal is also configured to overlap the obtained current image as well as the attribute information and the auxiliary attribute information transmitted from the cloud end server.

8. An intelligent mobile terminal, comprising an image position information sending unit and an overlapping unit; wherein,
the image position information sending unit is configured to send an obtained current image and determined current position information to the cloud end server; and
the overlapping unit is configured to overlap the obtained current image and attribute information transmitted from the cloud end server to form augmented reality information.

9. A cloud end server, comprising an image sending unit and an attribute information obtaining/sending unit; wherein,
the image sending unit is configured to send an image transmitted from a intelligent mobile terminal to a computer related to the intelligent mobile terminal; and
the attribute information obtaining/sending unit is configured to obtain attribute information of the image according to position information transmitted from the intelligent mobile terminal and send the attribute information to the intelligent mobile terminal and the computer.

10. A computer, comprising a receiving unit and an overlapping unit; wherein,
the receiving unit is configured to receive an image and attribute information transmitted from a cloud end server; and
the overlapping unit is configured to overlap the image and the attribute information received by the receiving unit to form augmented reality information.
